# EUROPEAN PATENT APPLICATION

(11) **EP 0 815 784 A1**
(43) Date of publication of application: **07.01.1998**
(21) Application number: 96420212.1
(22) Date of filing: 24.06.1996
(51) Int. Cl.: A47J 36/28

(54) **Self-heating container**

(71) Applicant: PECHINEY PACKAGING FOOD AND GENERAL LINE LIMITED, Luton, Bedfordshire LU1 3LG (GB)
(72) Inventor: Barrere, Michel, 33500 Libourne (FR); Fillon, Jacques, 77500 Chelles (FR); Henault, Jean-Claude, 72270 Villaines-Sous-Malicorne (FR); Hubert, Jean-Claude, 72200 La Fleche (FR); Lesage, Michel, 72200 La Fleche (FR); Martin, Jacques, 72270 Malicorne (FR); Tipple, Gerald Francis, Buckinghamshire MK45 8AQ (GB); Clarke, Alan Roy, Norwich, Norfolk NR7 8NX (GB)
(74) Representative: Pigasse, Daniel

(57) **Abstract**

The self-heating container (1) has an internal cavity (3) for containing food or beverage with an internal wall (4), separating said internal cavity from a reagent space (7,9), has a top end (5), has an external peripheral wall (6) with an external bottom (11) end enclosing said reagent space, said reagent space having means to put in contact a solid reagent (8) with a liquid reagent (10), is characterized in that,
a) said internal wall (4) forms at least one internal peripheral wall (40), said solid reagent (8) being located at least in a peripheral space (70) delimited by at leat said one internal peripheral wall (40),
b) diffusion means (80) are chosen so as to have an easy diffusion of said liquid reagent (10) into said solid reagent (8),
c) said means to put into contact said reagents is triggered by an external push on said external bottom end (11).

## Description

### FIELD OF THE INVENTION

This invention relates to self-heating containers, i.e. containers having means for the heating of the contained food or beverage.

### PRIOR ART

Self-heating containers are already known by themselves.
For instance, the patent FR 791.406 discloses a process for heating the food by a chemical reaction of lime with water, these reagents being separately enclosed in the container of the food.
The patent FR 6 661 895-A1 discloses a self-heating can by the same chemical reaction of lime with water, the water being encapsulated in a breakable glass container.

There are commercialized self-heating cans having a reagent space divided into two parts, one for lime and one for the water to react exothermically with the lime, the reaction being triggered externally.

### PROBLEMS TO SOLVE

There are mainly three problems to solve with the disclosed self-heating containers.
The first one is the comparatively high cost of the known containers. A first essential aim of the present invention is to make self-heating containers available at a lower cost.
The second one is to have a cheap and reliable means to trigger the chemical reaction when heating of the food is required.
The third one deals with the efficiency of the heating means, in relation with the final temperature of the content of the container, and with the time necessary to reach that final temperature.

### DESCRIPTION OF THE INVENTION

According to the invention, a self-heating container for drink or food has an internal cavity for containing said drink or food with an internal wall forming at least an internal bottom, separating said internal cavity from a reagent space, has a top end with opening means, has an external peripheral wall with an external bottom end closing said reagent space, said reagent space including separated spaces for a solid reagent and for a liquid reagent, and has means to put in contact said solid reagent with said liquid reagent, when said food or drink is to be heated, so as to trigger the exothermic reaction of said solid reagent with said liquid reagent,
and is characterized in that,
a) said internal wall forms at least one internal peripheral wall, said solid reagent being located at least in a peripheral space delimited by at least said one internal peripheral wall,
b) diffusion means of said liquid reagent are included so as to have an easy diffusion of said liquid reagent into said solid reagent, and therefore a substantially total reaction of said solid reagent,
c) said means to put into contact said reagents is triggered by an external push on said external bottom end.

The different means of the invention solve the different above problems :
- on the one hand, means are disclosed to have a comparatively low cost for the container, both by the choice of a reaction system with cheap solid and liquid reagents, and by the structure of the container made of parts that can be easily manufactured with conventional tools and easily assembled,
- on the other hand, means are disclosed to have a very efficient reaction of said liquid reagent with said solid reagent, and to have a high thermic transfer between the internal cavity containing said food or drink and the reagent space.
- at last, the external bottom end is specifically designed to constitute a safe triggering means.

### DESCRIPTION OF DRAWINGS

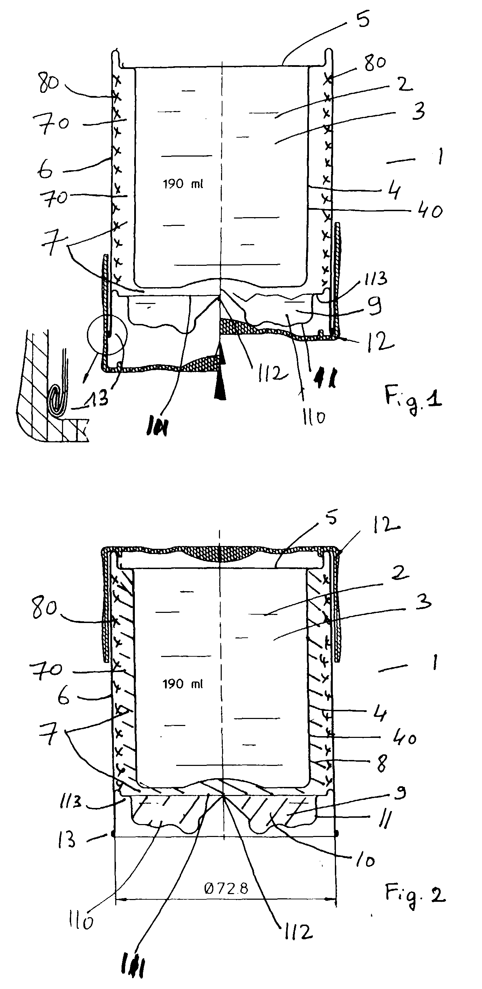

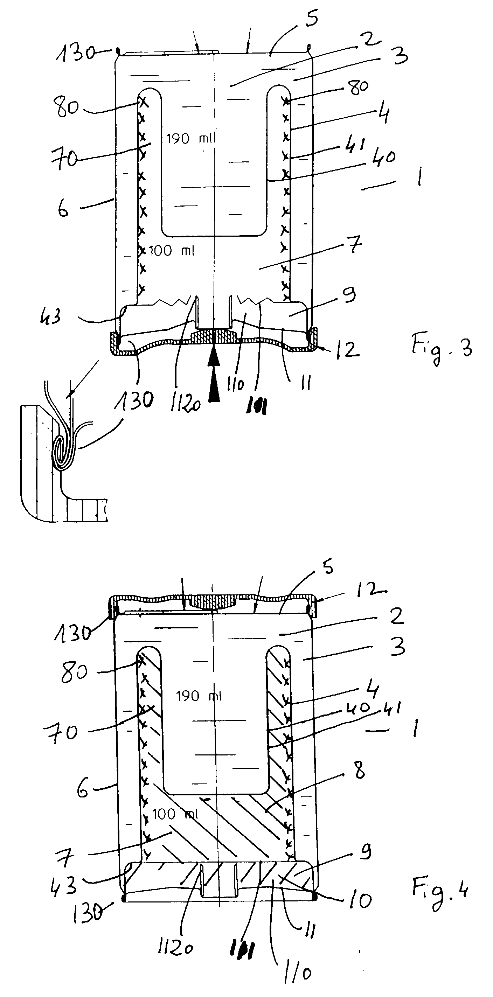

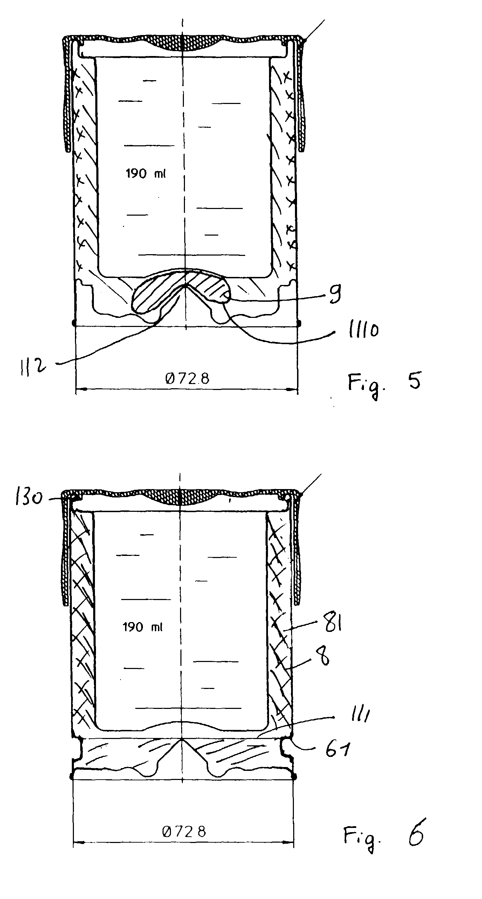

All the figures are axial section views of containers according to the invention.The containers (1) have an internal cavity (3) containing the food or drink (2) with an internal wall (4) comprising an internal peripheral wall (40,41) and an internal bottom (42). The internal cavity (3) is closed by a top end or thermosealable lid (5).
The container (1) comprises an external peripheral wall (6) and an external bottom end (11) fixed to said external peripheral wall, by seaming (13).
Space for reagents (7,9) is located between said internal wall (4) and said external bottom end (11), the space (7,70) for solid reagent (8), containing said solid reagent (8) and said diffusion means (80) having a portion which is a peripheral space (70), the space (9) for liquid reagent (10) being separated from the space for solid reagent by separation means, typically a membrane (111).
The external bottom end (11) comprises means (112) to put into contact solid reagent and liquid reagent.
A plastic overcap (12) is used to cover the top end (5) during handling and storage (see figures 2 and 4), whereas it is moved at the bottom end (11), both as a help to push said means(112) and as an isolation means (see figures 1 and 3).

Figures 1 and 2 correspond to one embodiment of the invention in which said peripheral space (70) is delimited on one side by one internal peripheral wall (40), and in which the space (9) for liquid reagent (10) is provided by a cavity (110) formed in the external bottom end (11) closed by a membrane (111) adhering (thermosealed) on a shoulder (113) of said bottom end (11). The bottom end (11) is provided with a sharp part (112), as a means to tear said separations means (111) and to put into contact solid reagent and liquid reagent. The internal wail (4) and the external peripheral wall (6) form one piece.The top end (5) is a thermosealable lid.

Figures 3 and 4 correspond to another embodiment of the invention in which said peripheral space (70) is delimited on both sides by internal peripheral walls (40,41), and in which the space (9) for liquid reagent (10) is provided by a cavity (110) formed with a shoulder (43) of the internal wall (4) on which a membrane (111) is adhering.
The bottom end (11) is provided with a sharp part (1120) thermosealed to said bottom end (11), as a means to put into contact solid reagent and liquid reagent.

The internal wall (4) and the external peripheral wall (6) form two pieces joined by a seaming (130). The top end (5) is a seamed easy-open lid.
Figures 5, 6 and 7 are other embodiments of the invention.
Figure 5 is similar to figures 1 and 2, but the space for the liquid reagent is a separate small container (1110) which can be pierced upon acting on means (112).
In figure 6, the membrane (111) is fixed to a shoulder (61) of said external peripheral wall (6), the internal wall (4) and the external peripheral wall (6) are joined by a seaming (130), and the solid reagent (8) is not a powder but a compacted solid (81) having the shape of the peripheral space (70), so that a porous peripheral layer (80) is not needed. Figure 7 is similar to figure 2, but the external bottom end (11) is joined to the external peripheral wall (6) by a thermosealed flanges (14).

Figures 8a to 8c show three different other embodiments of the junction (14) in figure 7 :
- overlap for thermosealing (14a) in figure 8a,
- compound lined junction (14b) in figure 8b,
- flattened double seam (14c) in figure 8c.

### DETAILED DESCRIPTION OF THE INVENTION

According to the invention, said diffusion means are not limited to a particular embodiment. Said diffusion means include:
- a porous peripheral layer (80) extending along said peripheral space (70),
- an additive or a porous substance mixed with said solid reagent (8),
- the use of granules of said solid reagent (8).
- the use of compacted powder having the shape of said peripheral space for solid reagent.
According to a first embodiment of the invention (see figures 1 and 2), the container (1) has a peripheral space (70) radially delimited by one internal peripheral wall (40) of said internal wall (4) and by said external peripheral wall (6).
As pictured at figures 1 and 2, said internal wall (4) and said external peripheral wall (6) may form one single piece, generally a metallic piece, in steel or aluminium.
But, as pictured at figures 3 and 4 for another embodiment, said internal wall (4) and said external wall (6) may form two pieces joined one to the other typically by seaming (130).

But, as pictured at figures 3 and 4 for another embodiment, said internal wall (4) and said external wall (6) may form two pieces joined one to the other typically by seaming (130).

According to another embodiment of the invention (see figures 3 and 4), the container (1) has a peripheral space (70) radially delimited by two peripheral walls (40,41) of said internal wall (4).
As in the first embodiment, said internal wall and said external peripheral wall may form one single metallic piece, or two pieces joined one to the other.

The present invention is not limited to these two embodiments and the man skilled in the art may introduce a lot of variations which do not depart from the present invention, such as those, for instance, disclosed in figures 5, 6 and 7.
Whenever said internal wall (4) and said external peripheral wall (6) form two pieces, they may be joined by any known means, typically by seaming (pictured at figures 3, 4 and 6) or by welding or by thermosealing or with the use of an adhesive.

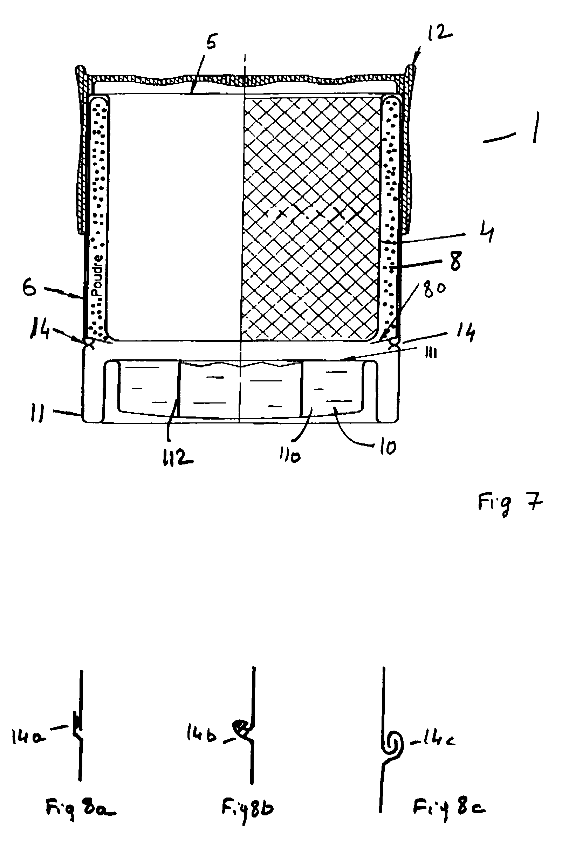

According to the invention, said external bottom end (11) forms a cavity (110), for containing said liquid reagent (10), closed by a rupturable or a detachable membrane (111), and has means (112) to rupture said membrane, in order to allow diffusion of said liquid reagent into solid reagent.
Said membrane may be fixed to a shoulder either of the external bottom end (11) (see figures 1 & 2, with reference 113 for the shoulder), or of the internal wall (4) (see figures 3 & 4, with reference 43 for the shoulder), or of the external peripheral wall (6) (see figure 6, with reference 61 for the shoulder).
But, as pictured at figure 5, it is possible according to the present invention to use an independent container (1110), for instance made of plastic film or aluminium foil, for the liquid reagent (9), which can be pierced by means (112).
The container according to the invention preferably comprises a plastic overcap (12) covering either said top end (5), and/or said external bottom end (11), in order to protect said top end and product in transit, to act as the trigger mechanism to release reagent (10), and to provide insulation to the consumer when holding the cup. In addition, it may help to make said container (1) stackable.

The containers of the present invention are provided preferably with top ends having known easy-opening means, preferably easy-open ends or thermosealable easy-open lids.
They have preferably said internal wall and/or said external peripheral wall made of a metallic core layer (steel or aluminium) covered by a protective layer of varnish or thermoplastic material.

As far as a self-beating container is concerned, said solid reagent is preferably lime (quicklime), and said liquid reagent is water.

### EXEMPLES

Most of the containers have been made from coated steel blanks (TFS),
Thickness of TFS blanks : 0,16 mm
Some of the containers have been made from coated aluminium blanks,
Thickness of Al blanks : 0,21 mm
Diameter of the container : 72.8 mm
Overall height of the containers : 97 mm
Capacity of the internal cavity : 190 cm³

### Exemple 1

Containers according to figures 1 and 2 have been manufactured with the following steps:
a) steel blanks have been drawn to form one piece consisting of the external peripheral wall (6) and the inernal cavity (4),
b) external bottom ends (11) have been drawn to the shape pictured at figures 1 and 2 in order to have a space (9) for liquid reagent of 60 cm³,
c) ends (11) have filled with 40 cm³ of water and a membrane of aluminium foil (111) has been thermosealed on the shoulder (113) of said ends (11),
d) a layer of absorbing paper, as a porous peripheral layer (80) has been placed in the peripheral space (70) for solid reagent,
e) 90 g of quick lime have been placed between the layer of absorbing paper (80) and the internal peripheral wall (40),
f) external bottom ends of step c) and container of step e) have been seamed,
After filling the containers with 160 cm³ of water (2), an easy peelable lid (5) was thermosealed, and a plastic overcap (12) (formed apart) was put on the top end.

### Exemple 2

Containers according to figures 3 and 4 have been made with the following steps :
a) the internal wall (4) has been drawn, with a shoulder (43),
b) the external peripheral wall (6) has been formed,
c) as in exemple 1, a layer of absorbing paper (80) and 90 g of quick lime have been placed in said peripheral space for solid reagent (70), and a membrane of aluminium foil (111) has been thermosealed on the shoulder (43) of said internal wall (4),
d) the piece obtained at step c) was turned upside down, placed into the piece formed at step b), and the cavity (110) formed with said membrane (111) was filled with 40 cm³ of water,
e) an external bottom end (11) has been drawn and a sharp piece (1120) has been thermosealed to said end,
f) seaming of three pieces : the external peripheral wall (6), the end of the internal wall (4) and the bottom end (11).
After filling the containers with 160 cm³ of water (2), an easy peelable lid (5) was thermosealed, and a plastic overcap (12) (formed apart) was put on the top end.

Different exemples have been made by varying the quantities of reagents (quick lime and water).

### Results :

Tests results have been obtained in the following way for each container tested:
- the plastic overcap (12) has placed on the bottom end (11), as in figures 2 and 4, and a themocouple was placed tightly in the internal cavity (3) containing the water (2),
- means (112) to put into contact the quick lime (8) and the water (10) were actuated,
- and temperature versus time was recorded, the container being maintained upside down in order that the liquid reagent (the water) (10) could flow down in the peripheral space (70).
Generally, the temperature is a linear fonction of time up to a time 〈〈t〉〉, where the temperature 〈〈T〉〉, which is the highest temperature reached, remains practically constant for a while before cooling down due to thermal exchange.

| Exemple 1 | Lime | Water | t(s) | T(°C) |
|---|---|---|---|---|
| | 90 g | 60 ml | 65 | 60 |
| | 90 g | 50 ml | 90 | 65 |
| | 84 g | 40 ml | 90 | 60 |
| | 73 g | 40 ml | 90 | 55 |
| | 60 g | 40 ml | 60 | 52 |
| | 50 g | 40 ml | 60 | 48 |

| Exemple 2 | Lime | Water | t(s) | T(°C) |
|---|---|---|---|---|
| | 90 g | 60 ml | 50 | 60 |
| | 90 g | 50 ml | 80 | 65 |
| | 84 g | 40 ml | 80 | 60 |
| | 73 g | 40 ml | 80 | 55 |
| | 60 g | 40 ml | 45 | 52 |
| | 50 g | 40 ml | 45 | 48 |

A commercial container containing 40 ml of coffee was tested too : the final temperature of 46 °C was reached after 165 s.

### ADVANTAGES OF THE PRESENT INVENTION

The present invention solves the three problems of comparatively low cost, of high efficency, and of the cheap, safe and reliable triggering means of said chemical reaction.
The low costs are obtained, because, on the one hand, the manufacture of the container needs more or less the standard tools used for the manufacture of standard containers, and starts from standard materials, and because, on the other hand, the reagents needed are both cheap and used in low quantities, given that the container according to the invention has a good thermal exchange or transfer of calories between the space for solid reagent where the exothermic reaction takes place, and the internal cavity containing the food or drink.
The efficency of the container is clearly demonstrated from the above results. Typically in one minute, a large cup of coffee is ready, whereas with a commercial container, more than twice as much time is needed.
The triggering means are cheap because the tools used and processes involved are only those common to the man of the art: drawing a bottom end (11) with a cavity (110) as pictured in figure 1, placing water (10) in the thus formed cavity (110), sealing a membrane (111), and then assembling said bottom end to the rest of the container.
The triggering means are safe and reliable because the piercing of said membrane (111) necessitates a specific push at the centre of said external bottom end (11) which, normally, cannot happen by accident during transportation and storage of said self-heating containers.

## Claims

1. Self-heating container for drink or food, having an internal cavity for containing said drink or food with an internal wall forming at least an internal bottom, separating said internal cavity from a reagent space, having a top end with opening means, having an external peripheral wall with an external bottom end closing said reagent space, said reagent space including separated spaces for a solid reagent and for a liquid reagent, and having means to put in contact said solid reagent with said liquid reagent, when said food or drink is to be heated, so as to trigger the exothermic reaction of said solid reagent with said liquid reagent,
characterized in that,
a) said internal wall forms at least one internal peripheral wall, said solid reagent being located at least in a peripheral space delimited by at least said one internal peripheral wall,
b) diffusion means of said liquid reagent are included so as to have an easy diffusion of said liquid reagent into said solid reagent, and therefore a substantially total reaction of said solid reagent.
c) said means to put into contact said reagents is triggered by an external push on said bottom end.

2. Container according to claim 1 wherein said diffusion means include a porous peripheral layer extending along said peripheral space.

3. Container according to claim 1 wherein said diffusion means include an additive or a porous substance mixed with said solid reagent.

4. Container according to any one of claims 1 to 3 wherein said diffusion means include the use of granules of said solid reagent or the use of compacted powder having the shape of said peripheral space for solid reagent.

5. Container according to any one of claims 1 to 4 wherein said peripheral space is radially delimited by one internal peripheral wall of said internal wall and by said external peripheral wall.

6. Container according to claim 5 wherein said internal wall and said external peripheral wall form one single metallic piece.

7. Container according to claim 5 wherein said internal wall and said external peripheral wall form two pieces joined one to the other.

8. Container according to any one of claims 1 to 4 wherein said peripheral space is radially delimited by two internal peripheral walls of said internal wall.

9. Container according to claim 8 wherein said internal wall and said external peripheral wall form one single metallic piece.

10. Container according to claim 8 wherein said internal wall and said external peripheral wall form two pieces joined one to the other.

11. Container according to any one of claims 7 or 10 wherein said internal wall and said external peripheral wall are joined by any known means, typically by seaming or welding or thermosealing or with the use of an adhesive.

12. Container according to any one of claims 1 to 11 wherein said external bottom end forms a cavity, for containing said liquid reagent, closed by a rupturable or a detachable membrane, and has means to rupture or detach said membrane, in order to allow diffusion of said liquid reagent into solid reagent.

13. Container according to any one of claims 1 to 12 comprising a plastic overcap covering either said top end or said external bottom end in order to protect said top end or said external bottom, to act as the trigger mechanism to release reagent, to provide insulation to the consumer when holding the container.

14. Container according to any one of claims 1 to 13 wherein said top end with opening means include easy-open ends, thermoscelable easy-open lids.

15. Container according to any one of claims 1 to 14 wherein said internal wall and/or said external peripheral wall is made of a metallic core layer covered by a protective layer of varnish or thermoplastic material.

16. Self-heating container according to any one of claims 1 to 15 wherein said solid reagent is lime, and said liquid reagent is water.
